# EUROPÄISCHE PATENTANMELDUNG

(11) **EP 0 983 793 A2**
(43) Veröffentlichungstag der Anmeldung: **08.03.2000**
(21) Anmeldenummer: 99117523.3
(22) Anmeldetag: 04.09.1999
(51) Int. Cl.: B01J 35/04, F01N 3/28

(54) **Abgaskatalysator aus Metallfolien**

(30) Priorität: 04.09.1998 DE 19840308
(71) Anmelder: LEISTRITZ AG & CO. Abgastechnik, D-90765 Fürth (DE)
(72) Erfinder: Ermer, Hermann, 90559 Burgthann (DE)
(74) Vertreter: Tergau & Pohl Patentanwälte

(57) **Zusammenfassung**

Bei einem Abgaskatalysator für Kraftfahrzeuge sind in einem Gehäuse (1) zu einem Folienstapel (4) zusammengefasste Folienscheiben (5) mit gegenseitigem Axialabstand zueinander angeordnet. Der Folienstapel ist vom Abgas in Radialrichtung durchströmbar. Die Folienscheiben (5) sind zwischen zwei den Gehäuseinnenquerschnitt überdeckenden Trägerscheiben (16,17) eingespannt, wobei die bezüglich der Strömungsrichtung (8) vordere Trägerscheibe (16) eine zentrale, koaxial zu den Durchströmöffnungen (6) der Folienscheiben (5) angeordnete Durchgangsöffnung (18) und die hintere Trägerscheibe mehrere randständige, einen zwischen Gehäuse und Folienstapel (4) angeordneten Ringraum (15) mit einer Auslassöffnung (3) des Gehäuses verbindende Durchbrechungen (19) aufweist.

## Beschreibung

Die Erfindung betrifft einen Abgaskatalysator insbesondere für Kraftfahrzeuge. Ein solcher, beispielsweise in DE 44 34 363 A1 und DE 93 15 010.5 U1 offenbarter Abgaskatalysator weist in einem Gehäuse angeordnete, quer zur Hauptströmungsrichtung des Abgases bzw. quer zur Gehäuselängsachse ausgerichtete Metall-Folienscheiben auf, die zu einem Folienstapel zusammengefasst den Katalysatorkörper bilden. Die Folienscheiben haben eine zentrale Durchströmöffnung, durch die Abgas in den Katalysatorkörper eingeleitet wird. Das Abgas wird in Radialrichtung umgelenkt und strömt zwischen die mit Axialabstand zueinander angeordneten und mit einer katalytisch wirksamen Beschichtung versehenen Folienscheiben hindurch. Zwischen dem Folienstapel und der Gehäuseinnenwandung ist ein Ringraum vorhanden, durch den das gereinigte Abgas abströmen und zu einem Auslass des Gehäuses gelangen kann.

Aufgabe der Erfindung ist es, einen Abgaskatalysator der eingangs genannten Art vorzuschlagen, bei dem die Folienscheiben auf fertigungstechnisch einfache Art und Weise im Gehäuse gelagert sind.

Diese Aufgabe wird nach Anspruch 1 dadurch gelöst, dass die Folienscheiben zwischen zwei den Gehäuseinnenquerschnitt überdeckenden Trägerscheiben eingespannt sind, wobei die bezüglich der Strömungsrichtung vordere Trägerscheibe eine zentrale, koaxial zu den Durchströmöffnungen der Folienscheiben angeordnete Durchgangsöffnung und die hintere Trägerscheibe mehrere randständige, den Ringraum mit dem Auslass verbindende Durchbrechungen aufweist. Ein von zwei Trägerscheiben zusammengehaltener Folienstapel können beispielsweise in ein etwa rohrförmiges Gehäuse eingeschoben und die Trägerscheiben mit ihrem Rand mit der Gehäuseinnenwand verschweißt werden. Eine separate, zeit- und materialaufwendige Fixierung jeder einzelnen Scheibe am Gehäuse oder an einem im Gehäuse angeordneten Träger ist nicht erforderlich. Die Montage des Folienstapels kann dadurch vereinfacht werden, dass die Trägerscheiben schon bereits bevor sie im Gehäuse montiert sind, die Folienscheiben mit der erforderlichen Spannkraft zusammenpressen. Dies kann durch ein nach dem Einsetzen des Folienstapels in das Gehäuse wieder entfernbares oder ein dauerhaft die Trägerscheiben verbindendes Halteelement bewerkstelligt werden.

Zwischen den Folienscheiben erstrecken sich punkt- oder inselförmige Strukturen, die einen Axialabstand und damit eine radiale Durchströmbarkeit des Folienstapels ermöglichen. Im Gegensatz zu konkreten, sich linienförmig erstreckenden Strömungskanälen erfolgt durch die Vielzahl der punkt- oder inselförmigen Strukturen eine vielfache Verwirbelung des Abgases auf seinem Weg durch den Folienstapel hindurch. Das Abgas kommt somit viel intensiver mit der katalytisch wirksamen Beschichtung der Folienscheiben in Berührung, als dies bei einer laminaren Durchströmung der Fall wäre. Die sich zwischen den Folienscheiben erstreckenden Strukturen sind vorzugsweise durch noppenartige Vorsprünge gebildet, die von einer Seite der Folienscheibe abstehen. Dabei können entweder alle Folienscheiben gleich gestaltet sein, nämlich nur auf einer Seite Noppen tragen oder es können sich nicht genoppte Folienscheiben mit beidseitig genoppten abwechseln.

Bei einer bevorzugten Ausführungsform sind die Folienscheiben in Radialrichtung dadurch fixiert, dass sie in gegenseitigem Formschlusseingriff miteinander stehen. Der Formschlusseingriff wird vorzugsweise dadurch erreicht, dass die noppenartigen Vorsprünge einer Folienscheibe in Vertiefungen derjeweils benachbarten Folienscheibe einrasten. Bei einer anderen bevorzugten Ausgestaltung sind die Folienscheiben zu einer Seite hin ringwulstförmig vorgewölbt. Es sind aber auch andere Formschlusseingriffe denkbar. So können die Folienscheiben beispielsweise nach Art eines Wellbleches ausgebildet sein, wobei die einzelnen Wellenstrukturen die zentrale Durchströmöffnung konzentrisch umgeben. Gegenüber planebenen Folienscheiben stellen die gekrümmten oder welligen Folienscheiben eine größere katalytisch wirksame Fläche zur Verfügung, was die Umsetzungsleistung eines Folienstapels bei im wesentlichen gleichbleibenden Abmessungen erhöht. Die Größe der Fläche ist durch entsprechende Wahl der Krümmungsradien bzw. durch das Ausmaß der Krümmung der Folienscheiben in weiten Grenzen variierbar.

In dem von den Öffnungsrändern der zentralen Durchströmöffnungen begrenzten Zentralraum ist vorzugsweise ein Zentralrohr angeordnet, das einen radial Durchtritt von Abgas ermöglichende Öffnungen aufweist. Das Zentralrohr schützt zum einen die Innenränder der Folienscheiben vor dem sehr heißen und mit hohen Druckspitzen pulsierenden Abgas. Zum anderen kann das Zentralrohr zur Vorfixierung des Folienstapels dienen, indem es nämlich an den Trägerscheiben fixiert wird. Ein solchermaßen vorgefertigter Folienstapel lässt sich leicht in ein Gehäuse einsetzen, wo er dann beispielsweise am Gehäuse angeschweißt werden muss.

Das in Axialrichtung in den Folienstapel einströmende Abgas staut sich an der hinteren Trägerscheibe, so dass es in diesem Bereich zu einem erhöhten Staudruck kommt. Dieser bewirkt, dass die entsprechenden Folienstapelbereiche von einem größeren Abgasvolumenstrom durchsetzt sind, als die weiter stromaufwärts im Bereich der vorderen Trägerscheibe angeordneten Folienstapelbereiche. Dieser Effekt kann verringert oder ganz kompensiert werden, wenn sich der wirksame Strömungsquerschnitt des von den zentralen Durchströmöffnungen gebildeten Zentralraums zur hinteren Trägerscheibe hin kontinuierlich verringert. Dies wird bevorzugt durch einen Formkegel erreicht, der mit seiner Basis zentral an der hinteren Trägerscheibe anliegt. Eine gleichmäßige axiale Aufteilung des Abgasvolumenstroms kann auch durch ein sich zur hinteren Trägerscheibe konisch verjüngendes Zentralrohr erreicht werden. In dem selben Sinne wirksam sind sich zur hinteren Trägerscheibe hin verkleinernde Öffnungen des Zentralrohres.

Die Erfindung wird nun anhand von in den beigefügten Zeichnungen dargestellten Ausführungsbeispielen näher erläutert. Diese zeigen:
- Fig. 1: einen Abgaskatalysator in schematisierter Längsschnittdarstellung.
- Fig. 2: den Detailausschnitt II in Fig. 1,
- Fig. 3: eine einzelne Folienscheibe in Draufsicht,
- Fig. 4: eine Schnittdarstellung der Folienscheiben gemäß der Linie IV-IV in Fig. 3,
- Fig. 5: einen Querschnitt durch einen Folienstapel entsprechende Linie V-V in Fig. 2.
- Fig. 6: einen Folienstapelausschnitt entsprechend Fig. 5, jedoch mit einer alternativen Ausgestaltung der Folienscheiben,

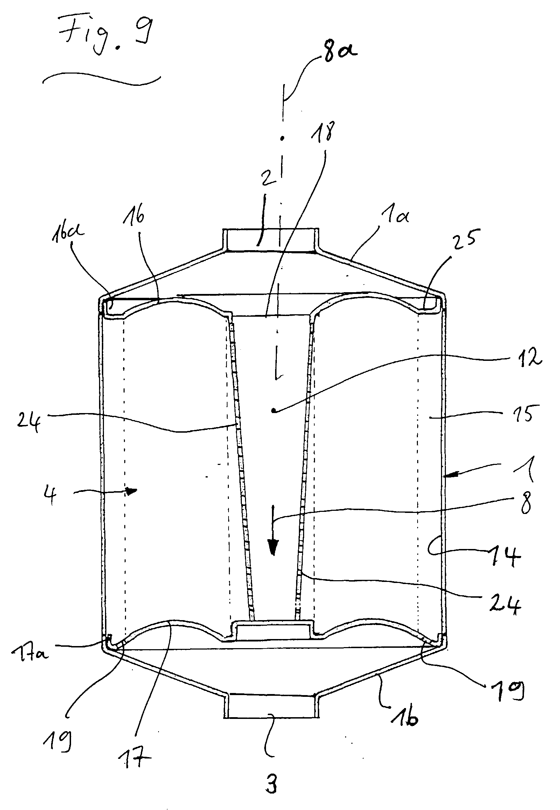

- Fig. 7: die Draufsicht auf den Endabschnitt eines Zentralrohres,
- Fig. 8: einen Abgaskatalysator in einer Darstellung entsprechend Fig. 1, bei dem im Zentralraum ein Verteilerkegel angeordnet ist,
- Fig. 9: einen Abgaskatalysator in einer Darstellung entsprechend Fig. 1, mit einem sich in Strömungsrichtung verjüngenden Zentralrohr,
- Fig. 10: einen Abgaskatalysator in schematisierter Längsschnittdarstellung, bei dem eine Gehäuse-Stirnwand von der vorderen Trägerscheibe gebildet ist.

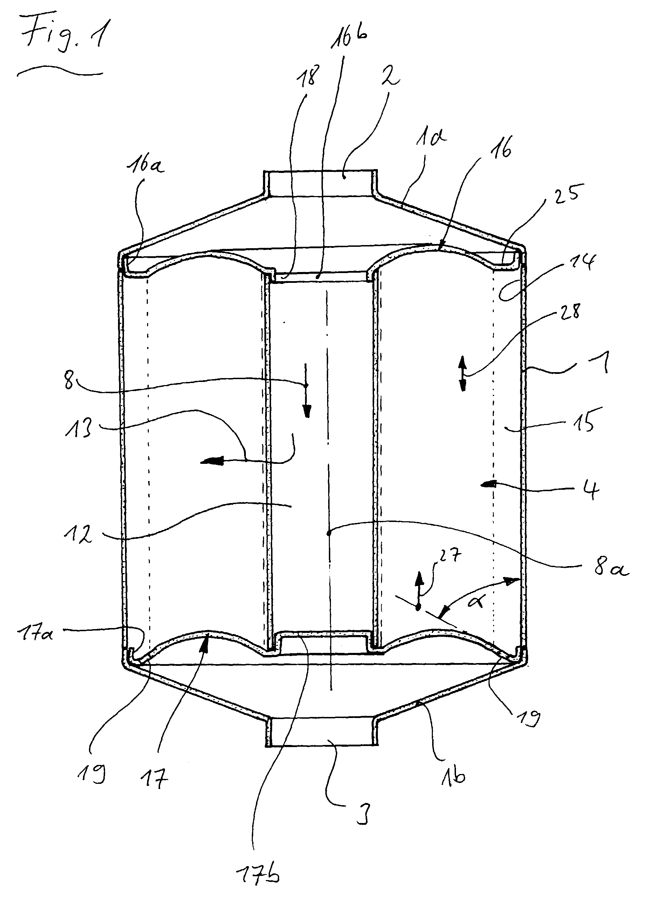

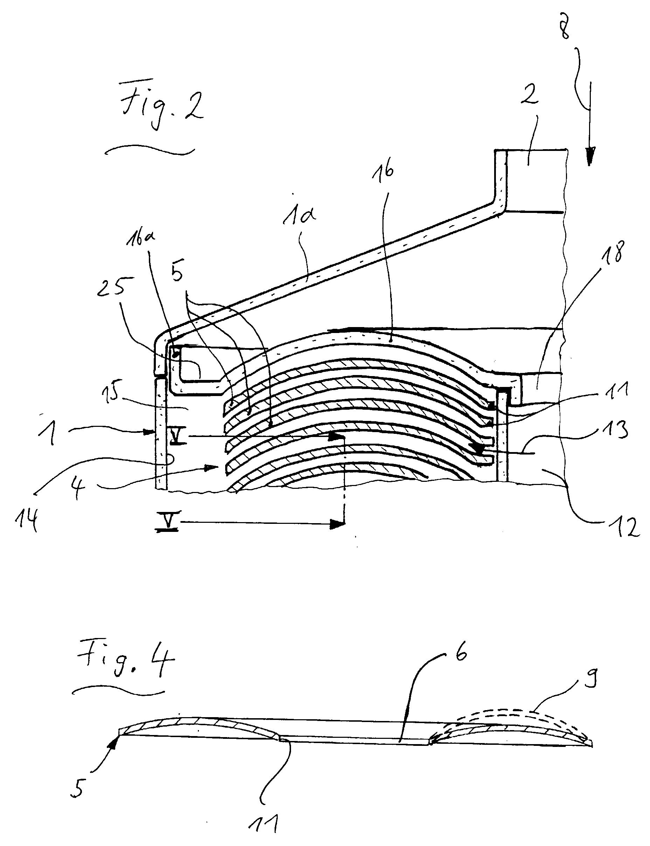

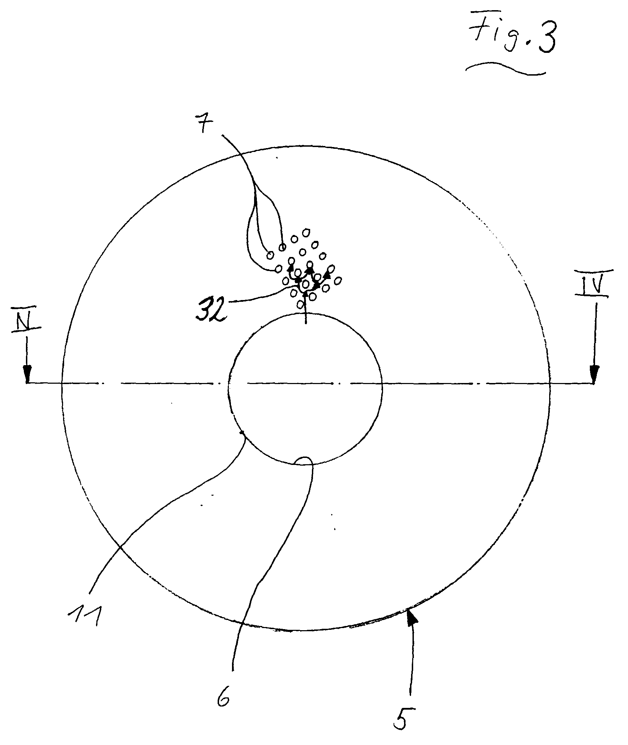

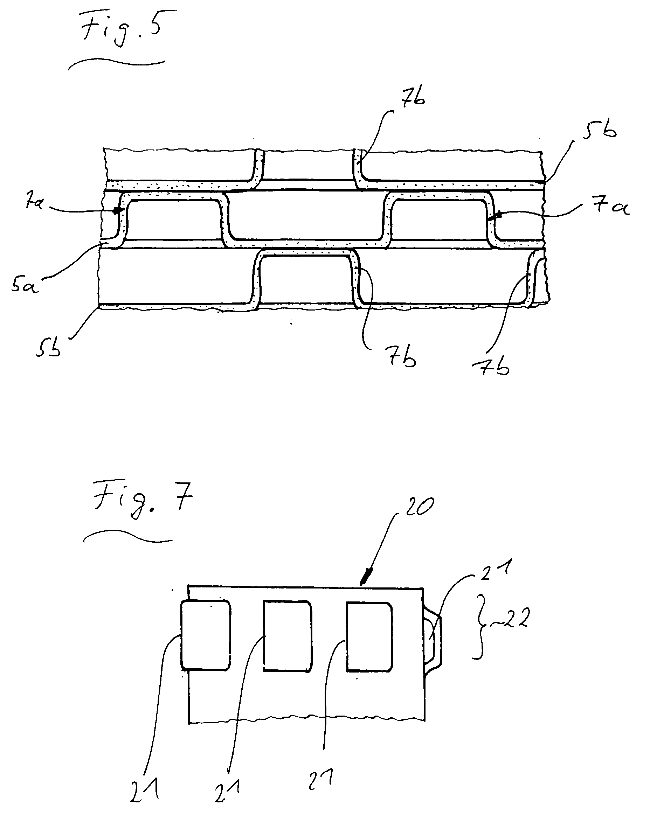

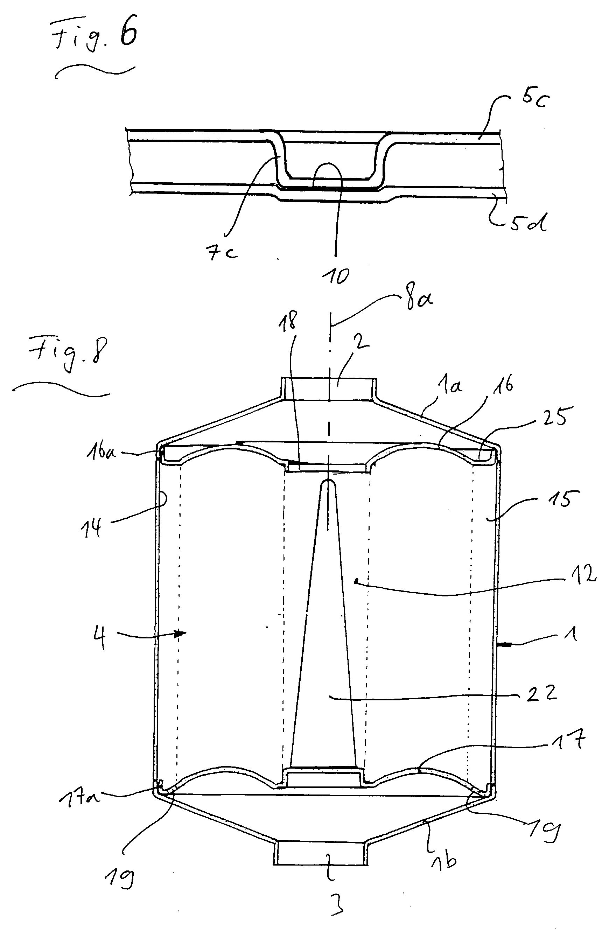

Wie insbesondere aus Fig. 1 ersichtlich ist, umfasst ein erfindungsgemäßer Abgaskatalysator im Wesentlichen ein Gehäuse 1 mit einem eine Einlassöffnung 2 aufweisenden Einlasstrichter 1a, einem eine Auslassöffnung 3 aufweisenden Auslasstrichter 1b und einen im Gehäuse 1 angeordneten Folienstapel 4. Der Folienstapel 4 setzt sich aus mit Axialabstand zueinander angeordneten Folienscheiben 5 aus Metall zusammen. Die Metallfolien weisen beispielsweise eine Dicke von 0,04 mm auf. Der Abstand zwischen den Folienscheiben beträgt ein Vielfaches der Foliendicke. Die Folienscheiben 5 sind im Wesentlichen der Innenquerschnittsform des Gehäuses 1 angepasst und weisen eine zentrale Durchströmöffnung 6 (Fig. 3) auf. Wie Fig. 2 zeigt, sind die Folienscheiben 5 im Wesentlichen parallel zueinander angeordnet. Aus ihrer dem Abgaseinlass 2 zugewandten Seite stehen punkt- oder inselförmige Strukturen, nämlich etwa noppenförmige Vorsprünge 7 hervor, die sich jeweils bis zur nächsten Folienscheibe erstrecken. Die Vorsprünge sind aus zeichnerischen Gründen in Fig. 2 und Fig. 4 weggelassen. In Fig. 5 und 6 sind sie in vergrößerter Darstellung gezeigt. Sie sind vorzugsweise im Tiefziehverfahren hergestellt. Die Vorsprünge 7a einer Folienscheibe 5a sind so angeordnet, dass sie versetzt zu den Vorsprüngen 7b der jeweils benachbarten Folienscheiben 5b angeordnet sind. Die versetzte Anordnung kann beispielsweise dadurch erreicht werden, dass die Vorsprünge auf Kreisen jeweils unterschiedlichen Durchmessers angeordnet sind. Die Folienscheiben 5 sind so ausgestaltet, dass sie mit einem quer zur Hauptströmrichtung 8 bzw. in Radialrichtung wirksamen Formschluss ineinander greifen. Die Hauptströmrichtung 8 ist durch den Abgaseinlass 2 und den Abgasauslass 3 definiert. Der Formschlusseingriff wird dadurch erreicht, dass die Folienzuschnitte wulstförmig gekrümmt sind, d.h. die die Durchgangsöffnung 6 umgebende Folienfläche ist gewölbt. Geometrisch betrachtet ist sie Teil der Mantelfläche eines Torus. In Fig. 4 ist ein Folienzuschnitt 5 mit relativ schwacher Krümmung der Folienfläche dargestellt. Die Krümmung kann aber auch stärker sein, wie dies durch die gestrichelte Linie 9 angedeutet ist. Im Falle sehr dünner und damit sehr flexibler Folienscheiben ist es ausreichend, wenn die Trägerscheiben 5 in der beschriebenen Weise gekrümmt sind. Werden nämlich ebene Folienscheiben zwischen zwei solche Trägerscheiben eingespannt, nehmen sie die Form der Trägerscheiben an. In Zusammenwirkung mit der zwischen den Folienscheiben vorhandenen Reibung wird auf diese Weise ebenfalls eine Stabilisierung des Folienstapels in Radialrichtung erreicht.

Der radial wirksame Formschluss der Folienscheiben 5 innerhalb eines Folienstapels 4 kann auch dadurch erreicht werden, dass die Vorsprünge 7c einer Folienscheibe 5c mit ihrem Freiende in eine entsprechend positionierte Vertiefung 10 der dem Vorsprung 7c zugeordneten Folienscheibe 5d eingreift (Fig. 6).

Die Abgasströmung gelangt über den Abgaseinlass 2 in das Katalysatorgehäuse und schließlich in einen von den Rändern 11 der Durchströmöffnungen 6 umgrenzten Zentralraum 12. Das in den im Wesentlichen zylinderförmigen Zentralraum 12 einströmende Abgas wird etwa um 90° umgelenkt und strömt in Richtung des Pfeiles 13 zwischen den Folienscheiben 5 hindurch. Es wird dabei durch die Vorsprünge 7 mehrfach umgelenkt, wie durch die Pfeile 32 in Fig. 3 angedeutet ist. Aufgrund dieser Umlenkung ergibt sich eine im Wesentlichen turbulente Abgasströmung. Dadurch ist einerseits die Adsorption von Schadstoffen an der mit einer katalytisch wirkenden Masse beschichteten Folienoberfläche und andererseits die Desorption der gebildeten Reaktionsprodukte von dieser Oberfläche begünstigt. Das Abgas durchströmt den Folienstapel 4 in Bezug auf das Gehäuse in Radialrichtung und tritt schließlich in einen zwischen der Gehäuseinnenwandung 14 und dem Folienstapel 4 angeordneten Ringraum 15 über. Dort gelangt es schließlich zum Abgasauslass 3. Die aus dem Folienstapel 4 in den Ringraum 15 übertretende Abgasmenge nimmt in Richtung auf den Abgasauslass 3 stetig zu, so dass dementsprechend der Strömungswiderstand zunimmt. Um diesen zu verringern, kann es zweckmäßig sein, den Ringraum in Richtung auf den Abgasauslass 3 zu stetig zu erweitern. Beispielsweise kann das Gehäuse 1 als sich zum Abgasauslass 3 hin öffnender Konus ausgebildet sein.

Der Folienstapel ist zwischen zwei Trägerscheiben 16,17 eingespannt, die mit ihrem quer zur Scheibenplanebene umgebogenen Rand 16a,17a an der Innenwandung 14 des Gehäuses 1 fixiert sind. Die erste Trägerscheibe 16 ist nahe der Einlassöffnung 2 angeordnet und weist eine zentrale Durchgangsöffnung 18 auf, die im Wesentlichen mit den Durchströmöffnungen 6 der Folienscheiben 5 fluchtet. Über die Durchgangsöffnung 18 gelangt das Abgas in den Zentralraum 12. Der sich an die Durchgangsöffnung 18 radial nach außen anschließende Bereich der Trägerscheibe 16 ist wie der entsprechende Bereich der ihm benachbarten Folienscheibe 5 ausgestaltet, der Folienstapel 4 liegt somit formschlüssig an der Trägerscheibe 16 an. Die zweite Trägerscheibe 17 weist keine zentrale Durchgangsöffnung auf und verschließt den Zentralraum 12 ablassseitig. In Ihrem Randbereich sind mehrere Durchbrechungen 19 vorhanden, die eine fluidische Verbindung zwischen dem Ringraum 15 und dem Abgasauslass 3 gewährleisten. Auch bei der Trägerscheibe 17 ist der sich an ihren Zentralbereich anschließende Bereich der Form der an ihm anliegenden Folienscheibe 5 angepasst.

Innerhalb des Zentralraumes 12 können verschiedene Verteilervorrichtungen vorgesehen sein, um den Abgasstrom radial und vor allem in Axialrichtung gleichmäßig verteilt in den Folienstapel 4 hineinzuleiten. Bei der in Fig. 1 dargestellten Ausführungsform ist im Zentralraum 12 ein im Wesentlichen zylinderförmiges Verteilerrohr 20 angeordnet. Es weist an seinem Außenumfang eine Vielzahl von Öffnungen, vorzugsweise von Ausströmschlitzen 21 auf (Fig. 6). Die Ausströmschlitze 21 sind durch einen von der Innenfläche des Verteilerrohres 20 her erfolgten Stanzvorgang erzeugt. Die Ausströmschlitze sind in mehreren mit Axialabstand zueinander angeordneten Ringreihen 22 angeordnet, und wandeln die Abgasströmung in eine um 90° gegenüber der Hauptströmrichtung 8 abgelenkte Rotationsströmung um, die bereits vor Eintritt in den Folienstapel ein hohes Maß an Strömungsturbulenzen aufweist. Der Innenrand der Trägerscheibe 16 ist in Hauptströmrichtung 8 umgebogen und bildet eine Schürze 16b, die stirnseitig in das Verteilerrohr 20 hineinragt. Der Außendurchmesser der Schürze 16b ist dabei geringfügig kleiner als der Innendurchmesser des Verteilerrohrs, so dass eine feste Steckverbindung zwischen den genannten Teilen erzielt wird. Die hintere Trägerscheibe 17 weist einen zentralen Vorsprung 17b auf, der stirnseitig in das Verteilerrohr 20 hineinragt. Der Außendurchmesser des Vorsprungs 17b ist geringfügig kleiner als der Innendurchmesser des Verteilerrohrs, so dass auch hier ein fester Sitz zwischen den genannten Teilen erreicht wird. Falls erforderlich, kann das Verteilerrohr 20 stirnseitig mit den Trägerscheiben 16,17 verschweißt sein, so dass eine feste vormontierte Einheit gebildet ist, die nur noch in ein rohrabschnittförmiges Gehäuse eingesetzt und darin befestigt werden muss.

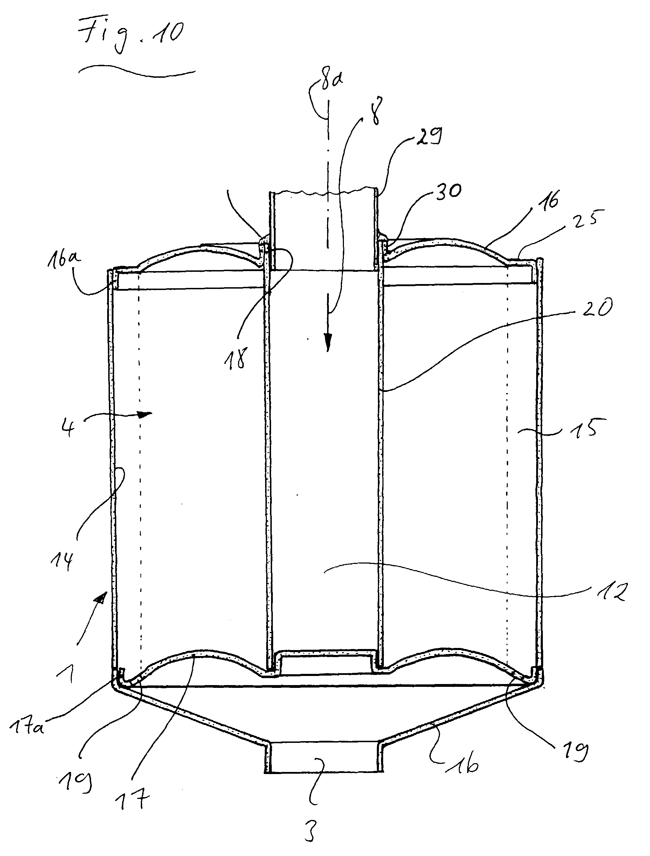

Bei dem in Fig. 8 dargestellten Ausführungsbeispiel ist die im Zentralraum 12 angeordnete Verteilervorrichtung durch einen sich zum Abgaseinlass 2 hin verjüngenden Verteilerkegel 22 gebildet, der mit seiner Basis an der hinteren Trägerscheibe 17 fixiert ist. Zusätzlich kann ein Verteilerrohr (nicht dargestellt) vorhanden sein. Eine andere Ausgestaltung einer Verteilervorrichtung ist in Fig. 9 abgebildet. Das Verteilerrohr 23 verjüngt sich in Hauptströmrichtung 8 und weist eine Vielzahl von Durchbrechungen 24 auf Der Durchmesser der Durchbrechungen 24 nimmt in Hauptströmrichtung 8 ab. Das Verteilerrohr 23 ist stirnseitig an den Trägerscheiben 16,17 fixiert. Diese und auch die weiter oben genannten Verteilervorrichtungen sollen eine gleichmäßige Verteilung des Abgasstroms über die Axialerstreckung des Folienstapels 4 gewährleisten.

Der Randbereich 25 der ersten Trägerscheibe 16 verläuft im Wesentlichen rechtwinklig zur Gehäuseinnenwandung 14, während der Randbereich 26 der zweiten Trägerscheibe 17 mit der Gehäuseinnenwandung 14 eine zur Trägerscheibe 16 bzw. zum Abgaseinlass 2 hin geöffneten spitzen Winkel α (Fig. 1) bildet. Bei einer erwärmungsbedingten Ausdehnung der Trägerscheibe 17 ergibt sich aus dieser Anordnung eine in Richtung des Pfeiles 27 verlaufende, d.h. zur Trägerscheibe 16 hin gerichtete Kraft - bzw. Bewegungskomponente. Eine erwärmungsbedingte, die ursprünglich eingestellte Vorspannung des Folienstapels verringernde Längsausdehnung des Gehäuses in Richtung des Doppelpfeiles 28 wird dadurch kompensiert.

Fig. 9 zeigt ein Ausführungsbeispiel, bei dem ein gehäuseseitiger Einlasstrichter fehlt. Ein Abgase in das Gehäuse 1 einleitendes Anschlussrohr 29 kann hier mittel- oder unmittelbar mit der Trägerscheibe 16 verbunden werden. Der Vorteil dieser Ausgestaltung liegt insbesondere in der kürzeren Baulänge und in einem geringeren Materialaufwand. Die Anbindung des Anschlussrohres 29 kann bei einem Abgaskatalysator mit einem Verteilerrohr 20 (entsprechend Fig. 1) dadurch erfolgen, dass das Anschlußrohr mit seinem Ende in dem Verteilerrohr 20 einliegt. Der Innenrand der Trägerscheibe 16 ist zu einem sich gegen die Hauptströmrichtung 8 erstreckenden Hals 30 ausgezogen, der das Verteilerrohr außenumfänglich umgibt. Die Stirnseiten des Halses 30 und des Verteilerrohres 20 sind über eine Schweißnaht 31 mit dem Anschlussrohr 29 verbunden. Bei Ausführungsformen ohne ein Verteilerrohr 20 oder einen vergleichbaren Einbau im Zentralraum 12 ist die Trägerscheibe 16 mit ihrem Hals 30 direkt an der Außenseite des Anschlußrohres 29 angeschweißt.

### Bezugszeichenliste

- 1: Gehäuse
- 1a: Einlasstrichter
- 1b: Auslasstrichter
- 2: Einlassöffnung
- 3: Auslassöffnung
- 4: Folienstapel
- 5: Folienscheibe
- 6: Durchströmöffnung
- 7: Vorsprung
- 8: Hauptströmrichtung
- 8a: Mittellängsachse
- 9: gestrichelte Linie
- 10: Vertiefung
- 11: Rand
- 12: Zentralraum
- 13: Pfeil
- 14: Gehäuseinnenwandung
- 15: Ringraum
- 16: Trägerscheibe
- 16a: Rand
- 16b: Schürze
- 17: Trägerscheibe
- 17a: Rand
- 17b: Vorsprung
- 18: Durchgangsöffnung
- 19: Durchbrechung
- 20: Verteilerrohr
- 21: Ausströmschlitz
- 22: Verteilerkegel
- 23: Verteilerrohr
- 24: Durchbrechung
- 25: Randbereich
- 26: Randbereich
- 27: Pfeil
- 28: Doppelpfeil
- 29: Anschlussrohr
- 30: Hals
- 31: Schweißnaht
- 32: Pfeil

## Patentansprüche

1. Abgaskatalysator, insbesondere für Kraftfahrzeuge, mit einem eine Einlassöffnung (2) und eine Auslassöffnung (3) aufweisenden Gehäuse und einem darin unter Freilassung eines Ringraumes (15) mit Radialabstand zur Gehäuseinnenwandung (14) gelagerten Folienstapel (4) aus mehreren mit Axialabstand zueinander angeordneter, zumindest auf einer Seite eine katalytisch wirksame Beschichtung aufweisenden Folienscheiben (5) mit zentraler Durchströmöffnung (6),
dadurch gekennzeichnet,
dass die Folienscheiben zwischen zwei den Gehäuseinnenquerschnitt überdeckenden Trägerscheiben (16,17) eingespannt sind, wobei die bezüglich der Strömungsrichtung (8) vordere Trägerscheibe (16) eine zentrale, koaxial zu den Durchströmöffnungen (6) der Folienscheiben (5) angeordnete Durchgangsöffnung (18) und die hintere Trägerscheibe (17) mehrere randständige, den Ringraum (15) mit der Auslassöffnung (3) fluidisch verbindende Durchbrechungen (19) aufweist.

2. Abgaskatalysator nach Anspruch 1,
gekennzeichnet durch
durch punkt- oder inselförmige, zwischen den Folienscheiben (5) angeordnete Strukturen.

3. Abgaskatalysator nach Anspruch 2,
dadurch gekennzeichnet,
dass die Strukturen aus wenigstens einer Seite einer Folienscheibe (5) vorstehende noppenartige Vorsprünge (7) sind.

4. Abgaskatalysator nach Anspruch 3,
dadurch gekennzeichnet,
dass sich der Folienstapel (4) aus einseitig genoppten Folienscheiben (5a,5b) zusammensetzt.

5. Abgaskatalysator nach Anspruch 3,
dadurch gekennzeichnet,
dass sich beidseitig genoppte mit nicht genoppten Folienscheiben abwechseln.

6. Abgaskatalysator nach einem der Ansprüche 1 bis 5,
gekennzeichnet durch
einen in Radialrichtung wirksamen gegenseitigen Formschlusseingriff der Folienscheiben (5).

7. Abgaskatalysator nach Anspruch 6,
dadurch gekennzeichnet,
dass zumindest ein Teil der Vorsprünge (7) mit ihrem Freiende in Vertiefungen der jeweils benachbarten Folienscheibe (5d) einrasten.

8. Abgaskatalysator nach Anspruch 6,
dadurch gekennzeichnet,
dass die Folienscheiben (5) ringwulstförmig gewölbt sind.

9. Abgaskatalysator nach einem der Ansprüche 1 bis 8,
gekennzeichnet durch
ein in dem von den Durchströmöffnungen (6) der Folienscheiben (5) umgrenzten Zentralraum (12) angeordnetes, mit Öffnungen versehenes und mit seinen beiden Stirnenden an den Trägerscheiben (16,17) fixiertes Verteilerrohr (20).

10. Abgaskatalysator nach Anspruch 9,
dadurch gekennzeichnet,
dass sich das Verteilerrohr (23) in Hauptströmrichtung (8) verjüngt.

11. Abgaskatalysator nach Anspruch 9 oder 10,
dadurch gekennzeichnet,
dass die Größe der im Verteilerrohr (20,23) vorhandenen Öffnungen in Hauptströmrichtung (8) abnimmt.

12. Abgaskatalysator nach einem der Ansprüche 1 bis 11,
dadurch gekennzeichnet,
dass die vordere Stirnwand des Gehäuses (1) von der vorderen Trägerscheibe (16) gebildet ist.
